Europäisches Patentamt

European Patent Office

Office européen des brevets

(19)

(11) Publication number: **0 087 478**
**B1**

# EUROPEAN PATENT SPECIFICATION

(12)

(45) Date of publication of patent specification: **08.06.88**

(51) Int. Cl.⁴: **H 02 K 1/16,** H 02 K 1/18

(21) Application number: **82902693.9**

(22) Date of filing: **08.09.82**

(86) International application number:
**PCT/JP82/00360**

(87) International publication number:
**WO 83/00953 17.03.83 Gazette 83/07**

(54) **LAMINATED STATOR CORE.**

(30) Priority: **08.09.81 JP 140242/81**

(43) Date of publication of application:
**07.09.83 Bulletin 83/36**

(45) Publication of the grant of the patent:
**08.06.88 Bulletin 88/23**

(84) Designated Contracting States:
**DE FR GB**

(56) References cited:
**WO-A-82/01793**
**DE-C- 558 303**
**DE-C- 687 687**
**FR-A-1 016 378**
**GB-A-1 100 589**
**JP-B-35 003 608**
**JP-Y-10 008 494**
**JP-Y-13 003 131**
**JP-Y-14 013 842**
**JP-Y-34 014 433**
**US-A-1 771 475**
**US-A-2 610 225**

(73) Proprietor: **FANUC LTD**
**3580, Shibokusa Aza-Komanba Oshino-mura**
**Minamitsuru-gun Yamanashi 401-05 (JP)**

(72) Inventor: **KAWADA, Shigeki**
**346-15, Shimoda Hino-shi**
**Tokyo 191 (JP)**
Inventor: **OYAMA, Shigeaki**
**939-82, Katakura-cho Hachioji-shi**
**Tokyo (JP)**
Inventor: **NAKAMURA, Kousei**
**1-2-8, Asahigaoka Hino-shi**
**Tokyo 191 (JP)**
Inventor: **NAKANO, Jiro**
**1-19-1-702, Hinodai Hino-shi**
**Tokyo 191 (JP)**

(74) Representative: **Allman, Peter John et al**
**MARKS & CLERK Suite 301 Sunlight House Quay**
**Street**
**Manchester M3 3JY (GB)**

Courier Press, Leamington Spa, England.

## Description

### Technical Field

The present invention relates to a stator, and more particularly to a stator of a rotary machine such as an electric motor, the stator comprising a laminated iron core, end plates and a frame which supports the iron core.

### Background Art

An electric motor generally comprises a rotor, a stator, and a casing. The stator comprises a laminated iron core (a laminated core of silicon steel plates), end plates and a casing which supports the laminated core. Cast casings provided with cooling fine may be used. Miniaturization, direct iron core cooling, and cost reduction considerations, however, have resulted in the development of electric motors without cast casings and with exposed iron cores. The elimination of cast or other casings, however, makes the laminated iron core susceptible to deformation by sliding of the laminated plates. Accordingly, it is necessary to provide a means for securely fastening a laminated iron core. Methods of fastening include the method of boring holes through the iron core (laminated silicon steel plates) and of binding the core together with bolts, and the method of making longitudinal grooves for welding in the outer periphery of the laminated iron core and performing arc welding. In the former case, there is the danger of twisting of the laminated iron core. In the latter case, there is the danger of insecure joining of the steel plates constituting the laminated iron core. Attempts have been made to securely fasten the laminated iron core by forming square longitudinal grooves in its outer periphery, inserting square bars into the square grooves by, e.g., hammering, and then welding together the laminated iron core and square bars. An arrangement of this type is described in European Patent Specification No. EP—B—0063162 which falls within the terms of Article 54(3). In this case, during the arc welding process, the still unwelded end portions of the square bars bend up and rise over the outer surface of the iron core due to thermal deformation. This makes it necessary to remove the risen end portions of the square bars by machining. Furthermore, the weld strength of the weld zone including the machined portions of the square bar is thus lower than that of the weld zone including the rest of the square bar.

German Patent Specification No. DE—C—687687 discloses an unlaminated rotor structure in which a cooling slot is sealed at its radially outer end by a bar welded to the rotor. Various bar shapes are described, one of which comprises a trapezoidal cross section received in a dovetail slot formed at the end of the cooling slot. This dovetail arrangement is provided to avoid the possibility of the bar being thrown off the rotor by centrifugal force. Other illustrated arrangements do not show any interengagement between the bar and the rotor prior to welding, and accordingly there is no suggestion that thermal deformation of the bar during welding is a problem or that the problem might be solved by adopting a dovetail arrangement.

U.S. Patent Specification No. US—A—2610225 describes a laminated core structure in which the laminated plates are aligned by pressing a deformable strip into a shallow groove of dovetail cross-section. The strips are not welded in position and therefore the problem of thermal deformation is not addressed.

### Disclosure of the Invention

An object of the present invention is to prevent bending and rising due to thermal deformation during welding of a bar inserted into a groove formed in an iron core.

According to the present invention, there is provided a stator comprising a laminated iron core, stator windings, end plates, and a frame formed around the periphery of the laminated iron core, the said frame comprising steel bars made of a non-magnetic steel welded to the laminated iron core and the end plates, the steel bars each have a trapezoidal shape in cross-section, the steel bars being accommodated in dovetail grooves formed in said laminated iron core, and the edges of the dovetail grooves in said laminated iron core being bevelled to form V-grooves between said laminated iron core and said steel bars.

It is preferable that the cross-section of the steel bars be an equilateral trapezoid.

There are at least two steel bars comprising the frame. It is preferable to arrange the steel bars symmetrically with respect to the centre axis of the stator.

The non-magnetic steel may be made for example, of stainless steel (SUS 304), in which no eddy current is generated.

### Brief Description of the Drawings

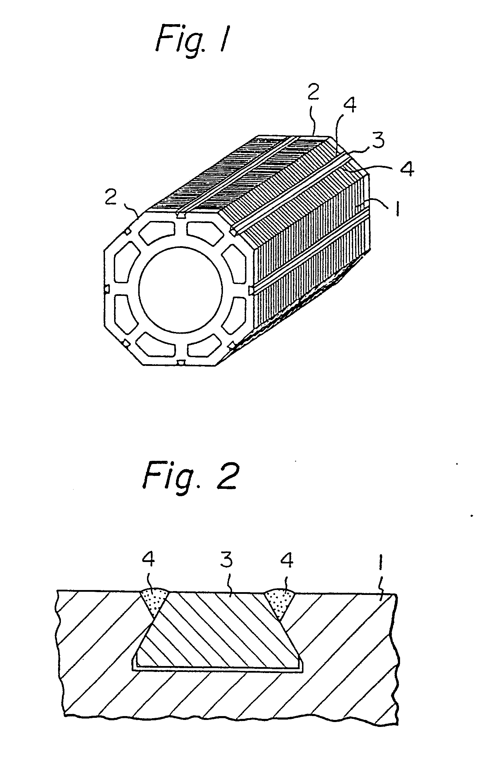

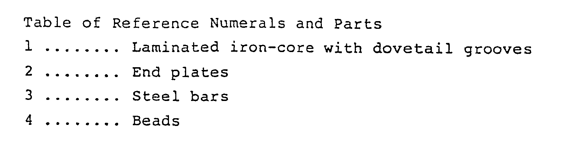

Figure 1 is a schematic perspective view of a stator according to the present invention; and Fig. 2 is a partial sectional view of the stator of Fig. 1.

### Best Mode for Carrying Out the Invention

As illustrated in Fig. 1, a stator of a rotary machine according to the present invention comprises a laminated iron-core 1, end plates 2, and steel bars 3 serving as a frame. The laminated iron-core 1 is formed by laminating a large number of silicon steel plates having a predetermined shape. Each of the silicon steel plates has dovetail grooves formed by punching, as illustrated in Fig. 2. The end plates 2 are made of structural steel or castings and have dovetail grooves of the same shape as the above-mentioned dovetail groove. The steel bars 3 have a trapezoidal cross-section corresponding to the dovetail grooves, so that the bars 3 can be slided and inserted into the dovetail grooves. The trapezoidal shape of the steel bars is an equilateral trapezoid. The edges of the dovetail grooves of the laminated iron-core, i.e., the silicon steel plates, are beveled so as to form V-grooves for welding by the steel bars and the beveled portions of the iron-core when the steel bars 3 are inserted in the dovetail grooves. The steel bars 3 are made of non-magnetic steel, e.g., stainless steel (SUS 304), having a length equal to the sum of the length of the laminated iron-core 1 and the thickness of the two end plates 2.

After the steel bars 3 are inserted in the dovetail grooves of the laminated iron-core 1 and of the end plates 2, the steel bars 3 are welded to the laminated iron-core 1 and to the end plates 2 by forming beads (weld metal) 4 in the V-grooves by a conventional MIG or TIG welding method. Since the inclined planes of the dovetail grooves of the laminated iron-core 1 can suppress the thermal deformation of the steel bars 3 during welding, there is no upward bend of the end portion of the steel bars 3 which is finally welded. If necessary, the beads 4 are ground so as to obtain a smooth surface. In the case of the stator shown in Fig. 1, eight steel bars 3 are used. However, taking the necessary strength for fastening the laminated iron-core into consideration, it is possible to decrease the number of the used steel bars 3. Furthermore, it is possible to automatically carry out the above-mentioned welding.

Industrial Applicability

With the stator according to the present invention, the laminated iron-core can be fastened with sufficient strength, an electric motor can be made smaller to the extend of removal of a conventional casing, and the laminated iron-core can be directly cooled.

**Claims**

1. A stator comprising a laminated iron core, stator windings, end plates, and a frame formed around the periphery of the laminated iron core, the said frame comprising steel bars (3) made of a non-magnetic steel welded to the laminated iron core (1) and the end plates (2), the steel bars (3) each have a trapezoidal shape in cross-section, the steel bars (3) being accommodated in dovetail grooves formed in said laminated iron core (1), and the edges of the dovetail grooves in said laminated iron core (1) being bevelled to form V-grooves between said laminated iron core (1) and said steel bars (3).

2. A stator according to claim 1, characterised in that said trapezoidal shape is an equilateral trapezoid.

**Patentansprüche**

1. Stator, umfassend einen laminierten Eisenkern, Statorwicklungen, Stirnplatten und einen um den Umfang des laminierten Eisenkerns gebildeten Rahmen, wobei der Rahmen Stahlstangen (3) aufweist, die aus nicht-magnetischem Stahl bestehen und mit dem laminierten Eisenkern (1) und den Stirnplatten (2) verschweißt sind, von denen jede Stahlstange (3) einen trapezförmigen Querschnitt aufweist und die Stahlstangen (3) in schwalbenschwanzförmigen Nuten, die im laminierten Eisenkern (1) ausgebildet sind, aufgenommen sind, und wobei die Kanten der schwalbenschwanzförmigen Nuten in dem laminierten Eisenkern (1) zur Bildung von V-Nuten zwischen dem laminierten Eisenkern (1) und den Stahlstangen (3) abgeschrägt sind.

2. Stator nach Anspruch 1, dadurch gekennzeichnet, daß die Trapezform eine gleichschenkelige Trapezform ist.

**Revendications**

1. Stator comprenant un noyau à tôles feuilletées, des enroulements de stator, des plaques d'extrémité et une armature disposée autour de la périphérie du noyau à tôles feuilletées, l'armature comprenant des barres en acier (3) réalisées en un acier non-magnétique et soudées au noyau à tôles feuilletées (1) et aux plaques d'extrémité (2), les barres en acier (3) présentant chacune une section de forme trapézoïdale et étant logées dans des gorges en queue d'aronde ménagées dans le noyau à tôles feuilletées (1), les bords des gorges en queue d'aronde du noyau à tôles feuilletées (1) étant biseautés de façon à former des rainures en forme de V entre le noyau à tôles feuilletées (1) et les barres en acier (3).

2. Stator conforme à la revendication 1, caractérisé en ce que la forme trapézoïdale est un trapèze isocèle.

*Fig. 1*

*Fig. 2*

1

0 087 478

Table of Reference Numerals and Parts

1 ........ Laminated iron-core with dovetail grooves

2 ........ End plates

3 ........ Steel bars

4 ........ Beads